Europäisches Patentamt

European Patent Office

Office européen des brevets

(11) Veröffentlichungsnummer: **0 489 059 B1**

(19)

(12) **EUROPÄISCHE PATENTSCHRIFT**

(45) Veröffentlichungstag der Patentschrift: **30.03.94**

(51) Int. Cl.⁵: **F02D 41/14**

(21) Anmeldenummer: **90912453.9**

(22) Anmeldetag: **23.08.90**

(86) Internationale Anmeldenummer:
**PCT/EP90/01410**

(87) Internationale Veröffentlichungsnummer:
**WO 91/02892 (07.03.91 91/06)**

Die Akte enthält technische Angaben, die nach
dem Eingang der Anmeldung eingereicht wurden
und die nicht in dieser Patentschrift enthalten sind.

(54) **VERFAHREN UND VORRICHTUNG ZUR ZYLINDERSELEKTIVEN ÜBERWACHUNG DES ENERGIEUMSATZES BEI EINER MEHRZYLINDER-BRENNKRAFT-MASCHINE.**

(30) Priorität: **23.08.89 DE 3927796**
**22.03.90 DE 4009285**

(43) Veröffentlichungstag der Anmeldung:
**10.06.92 Patentblatt 92/24**

(45) Bekanntmachung des Hinweises auf die
Patenterteilung:
**30.03.94 Patentblatt 94/13**

(84) Benannte Vertragsstaaten:
**DE FR GB**

(56) Entgegenhaltungen:
**EP-A- 0 306 905**
**FR-A- 2 620 816**

**Patent Abstracts of Japan, Vol. 8, No. 76
(M-288), 9 April 1984 & JP, A, 58222903 (TO-
KYO SHIBAURA DENKI K.K.) 23 December
1983**

**Patent Abstracts of Japan, Vol. 12, No. 374
(M-749), 6 October 1988 & JP, A, 63124842
(HITACHI LTD) 28 May 1988**

(73) Patentinhaber: **AUDI AG**

**D-85045 Ingolstadt(DE)**

(72) Erfinder: **WIMMER, Wolfgang**
**Veilchenweg 8**
**D-7101 Erlenbach(DE)**

(74) Vertreter: **Speidel, Eberhardt**
**Postfach 13 20**
**D-82118 Gauting (DE)**

**Beschreibung**

Die Erfindung bezieht sich auf ein Verfahren und eine Vorrichtung zur zylinderselektiven Überwachung des Energieumsatzes bei einer Mehrzylinder-Brennkraftmaschine, um beispielsweise bei gemischverdichtenden Brennkraftmaschinen Verbrennungsaussetzer in einem oder mehreren Zylindern und bei Diesel-Brennkraftmaschinen Zylinder mit unterschiedlichem Energieumsatz und daraus sich ergebender schlechter Leerlaufqualität und schlechter Laufruhe identifizieren zu können.

Verbrennungsaussetzer in gemischverdichtenden Brennkraftmaschinen mit Lambdaregelung und Abgas-Katalysator können zu erheblicher thermischer Schädigung des Katalysators führen, sofern dadurch Nachreaktionen das unverbrannten Kraftstoff-Luft-Gemisches im Abgastrakt auftreten. Hohe Katalysator-Temperaturen stellen zudem eine Brandgefahr für das Fahrzeug dar. Darüber hinaus wird durch Verbrennungsaussetzer die Abgasqualität wesentlich verschlechtert, unabhängig davon, ob die Ursache für die Verbrennungsaussetzer in Fehlern der Kraftstoffzumessung oder der Zündung besteht.

Es sind bereits Verfahren zur Erkennung von Verbrennungsaussetzern bekannt, die auf einer Analyse das Verlaufs der Momentan-Drehzahl der Brennkraftmaschine bzw. der Winkelgeschwindigkeit der Kurbelwelle während eines Arbeitsspiels basieren. Verbrennungsaussetzer führen dabei zu speziellen Drehzahlverlaufs-Änderungen gegenüber dem Normalzustand. Die Momentan-Drehzahl wird bei diesen Verfahren aus der Zeitdauer ermittelt, während der sich die Kurbelwelle um einen definierten Kurbelwinkelbereich dreht. Die Festlegung dieser Kurbelwinkel-Bereiche erfolgt mit Hilfe von Markierungen an einem von der Kurbelwelle angetriebenen Rad. Üblicherweise werden diese Markierungen von den Zähnen das Anlasserzahnkranzes am Schwungrad gebildet, jedoch kann auch eine eigene, von der Kurbelwelle angetriebene Scheibe mit Markierungen vorgesehen werden. Die Markierungen erzeugen ein entsprechendes Signal in einem Induktivaufnehmer. Die Zeitmessung erfolgt durch Zählen der Impulse eines Impulsgebers, die in den Kurbelwinkelbereich fallen. Die Bestimmung der Phasenlage, die für die Zuordnung der einzelnen Zylinder notwendig ist, erfolgt mittels eines Phasensignals, welches einmal pro Arbeitsspiel (bei Viertakt Brennkraftmaschinen mit zwei Umdrehungen der Kurbelwelle pro Arbeitsspiel z.B. von der Nockenwelle) ausgelöst wird.

Die bekannten Verfahren verwenden einen über den Kurbelwinkel hoch aufgelösten Verlauf der Momentan- Drehzahl. Dabei wird die Zeitdauer von sehr schmalen Kurbalwinkelbereichen erfaßt, wozu im Hinblick auf die erforderliche Genauigkeit hohe Taktraten für den Impulsgeber nötig sind. Bei einem in der US-PS 45 32 592 beschriebenen Verfahren werden $6°$-Kurbelwinkel-Bereiche mit einer Impulsrate von 5 MHz abgetastet. Bei derartig hoch aufgelösten Momentan-Drehzahlwerten stellen jedoch Störeinflüsse durch zyklische Schwankungen des Verbrennungsablaufs sowie durch Fertigungstoleranzen des Zahnkranzes erhebliche Probleme dar.

Die gleichen Probleme entstehen bei dem Verfahren gemäß der DE-A 28 38 927, bei dem ein zylinderselektiver Vergleich der Soll-Ist-Leistung anhand der hoch aufgelösten momentanen Winkelgeschwindigkeit bzw. Winkelbeschleunigung erfolgt.

In der DE-A 37 24 420 wird ein Verfahren beschrieben, bei dem innerhalb eines Motorarbeitsspiels momentane Drehzahlwerte mindestens doppelt so oft ermittelt werden, wie der Anzahl der Zylinder entspricht, und durch Vergleich von jedem Zylinder zugeordneten Minimal- und Maximalwerten Verbrennungsaussetzer erkannt werden. Dieses Verfahren erfordert einen hohen Berechnungsaufwand.

Bei einem ähnlichen Verfahren gemäß DE-A 36 15 547 werden aus den jedem Zylinder zugeordneten maximalen und minimalen Momentandrehzahlwerten für jeden Zylinder Differenzen gebildet. Zur Erkennung von Verbrennungsaussetzern wird jeweils der Differenzwert eines Zylinders ins Verhältnis gesetzt zum Differenzwert des in Zündreihenfolge vorausgegangenen Zylinders, und es wird geprüft, ob dieses Verhältnis einen Schwellenwert unterschreitet. Wenn jedoch die Verbrennung in zwei aufeinanderfolgenden Zylindern aussetzt, läßt sich mit diesem Verfahren der Aussetzer im zweiten Zylinder nicht feststellen.

Ein Hauptnachteil der bekannten Verfahren besteht darin, daß der Einfluß eines dynamischen Motorbetriebs (Beschleunigung, Abbremsen) auf die Erkennung von Verbrennungsaussetzern nicht berücksichtigt wird.

Der Erfindung liegt die Aufgabe zugrunde, ein Verfahren zur zylinderselektiven Überwachung des Energieumsatzes bei einer Mehrzylinder-Brennkraftmaschine zu schaffen, mit dem eine Veränderung des Energieumsatzes in einem Zylinder, hervorgerufen durch aussetzende oder schlechte Verbrennung, bei gleichzeitiger Vermeidung von Fehl-Erkennungen insbesondere auch im dynamischen Fahrbetrieb zuverlässig erkannt wird, so daß entsprechende Gegenmaßnahmen getroffen werden können, wie z.B. Unterbrechung der Kraftstoffversorgung des aussatzenden Zylinders zur Vermeidung einer Katalysatorschädigung durch Nachverbrennungen und zum Schutz des Fahrzeuges, Aufleuchten einer Fehlerlampe im Armaturenbrett zur Warnung des Fahrers und Abspeicherung des Fehlers für die Kundendienst-Diagnose.

Diese Aufgabe wird erfindungsgemäß durch die im Kennzeichen des Anspruchs 1 bzw. 2 angegebenen Merkmale gelöst.

Das erfindungsgemäße Verfahren geht von folgender vereinfachender physikalischer Überlegung aus:

Die bei der Verbrennung in jedem Zylinder entstehenden Gaskräfte erzeugen an der Kurbelwelle ein Drehmoment, das während der Drehung um einen Kurbelwinkelbereich an der Kurbelwelle Arbeit leistet. Dieser Kurbelwinkelbereich erstreckt sich maximal vom Zünd-OT des jeweiligen Zylinders bis zum nachfolgenden UT. Bei aussetzender Verbrennung wird diese Arbeit nicht geleistet, und entsprechend nimmt die Rotationsenergie von Kurbeltrieb und Schwungmasse in diesem Kurbelwinkelbereich ab. Die Rotationsenergie ist proportional zum Quadrat der Momentan-Drehzahl der Brennkraftmaschine.

Bei dem erfindungsgemäßen Verfahren wird nicht wie bei den bekannten Verfahren die Momentan-Drehzahl bzw. Winkelgeschwindigkeit oder deren Zeitableitung (Beschleunigung) untersucht, sondern der Abfall des Quadrates der Momentan-Drehzahl innerhalb des genannten Kurbelwinkelbereichs. Da jedem Zylinder der Brennkraftmaschine ein entsprechender Winkelbereich zugeordnet werden kann, ist eine zylinderselektive Überwachung des Energieumsatzes gewährleistet.

Bei konstanter Zylinderfüllung ist der $n^2$-Abfall bei aussetzender Verbrennung unabhängig von der (mittleren) Motordrehzahl, weil jeweils der gleiche Arbeitsbetrag an der Kurbelwelle fehlt. Dies bedeutet im Hinblick auf die Festlegung von Erkennungsschwellen eine erhebliche Vereinfachung gegenüber einer Analyse des Momentandrehzahl-Verlaufs, die stark drehzahlabhängige Schwellenwerte erforderlich macht.

Bei dem erfindungsgemäßen Verfahren wird während jedes Arbeitsspiels des Motors für jeden Zylinder ein momentaner Drehzahl-Quadrat-Wert ermittelt. Der zu überprüfende Energie- bzw. $n^2$-Abfall ergibt sich als Differenz der $n^2$-Werte von in Zündfolge aufeinanderfolgenden Zylindern. Somit werden pro Arbeitsspiel der Brennkraftmaschine nur so viele Werte ermittelt, wie der Zylinderzahl der Brennkraftmaschine entspricht.

Jeder $n^2$-Wert wird dabei aus der Zeitdauer eines geeignet gewählten Kurbelwinkelbereichs berechnet. Die Zeitdauer ergibt sich aus der Anzahl von Impulsen eines Impulsgebers innerhalb des Kurbelwinkelbereichs, der beispielsweise, wie bekannt, mit Hilfe des Zahnsignals vom Schwungradzahnkranz und eines Phasensignals festgelegt werden kann. Da jedem Zylinder ein Kurbelwinkelbereich für die $n^2$-Bestimmung zugeordnet ist, folgen die Bereiche im Zündabstand aufeinander.

Bei dem erfindungsgemäßen Verfahren werden im Gegensatz zu den bekannten Verfahren breite Kurbelwinkelbereiche verwendet. Die Breite ist mindestens so groß zu wählen, daß praktisch einfach realisierbare Zählimpuls-Raten (z.B. 1 MHz) für die Zeitmessung ausreichend sind, und daß Störeinflüsse, beispielsweise durch zyklische Schwankungen, Fertigungstoleranzen des Zahnkranzes und rückwirkende Fahrbahn-Unebenheiten, eliminiert werden. Nach oben hin ist die Breite der Kurbelwinkelbereiche durch die Forderung begrenzt, daß ein $n^2$-Abfall bei aussetzender Verbrennung noch hinreichend deutlich erkennbar bleibt.

Vorzugsweise erfolgt die Ermittlung der Momentan-Drehzahl über einen dem Zündabstand entsprechenden Kurbelwinkel-Bereich. Auf diese Weise grenzen die Winkelbereiche aufeinanderfolgender Zylinder aneinander, womit die Anzahl der erforderlichen Kurbelwinkel-Marken (beispielsweise Zahnsignal-Flanken) auf die Hälfte reduziert wird, da das Ende jedes Kurbelwinkel-Bereiches mit dem Anfang des nächsten zusammenfällt.

Ein wesentliches Merkmal des erfindungsgemäßen Verfahrens ist die Berücksichtigung des Einflusses eines dynamischen Motorbetriebs auf den $n^2$-Verlauf, die für eine zuverlässige Erkennung von Verbrennungsaussetzern erforderlich ist, denn im Beschleunigungsfall überlagert sich einem durch einen eventuellen Aussetzer erfolgenden $n^2$-Abfall die beschleunigungsbedingte $n^2$-Zunahme, wodurch die Aussetzererkennung je nach Beschleunigungsgrad erschwert oder auch verhindert würde. Andererseits tritt auch bei einem fehlerfreien Motor beim Abbremsen ein $n^2$-Abfall auf, der zur Fehldiagnose von Verbrennungsaussetzern führen könnte. Das erfindungsgemäße Verfahren enthält daher eine Dynamik-Kompensation. Dazu wird innerhalb eines jeden Arbeitsspieles der Brennkraftmaschine vom tatsächlichen $n^2$-Verlauf der mittlere lineare $n^2$-Anstieg (bei Beschleunigung) bzw. $n^2$-Abfall (beim Abbremsen) innerhalb dieses Arbeitsspiels subtrahiert, so daß die durch Beschleunigung oder Abbremsen des Fahrzeugmotors hervorgerufene $n^2$-Änderung eliminiert wird. Sodann wird für jeden Zylinder die Differenz zwischen dem korrigierten $n^2$-Wert im Zünd-OT dieses Zylinders und dem korrigierten $n^2$-Wert im Zünd-OT des in der Zündfolge nächsten Zylinders gebildet, und die Differenzwerte werden mit vorbestimmten Schwellenwerten verglichen. Dabei werden Schwellenwerte für jede einzelne Verbrennung oder für zu Gruppen zusammengefaßte Verbrennungen, beispielsweise für ein gesamtes Motorarbeitsspiel, verwendet. Eine Fehlerdiagnose erfolgt, wann eine kritische relative Häufigkeit der Schwellenwert-Überschreitung eines oder mehrerer Zylinder auftritt.

Vorzugsweise werden die Schwellenwerte in Abhängigkeit von Last und Drehzahl der Brennkraftmaschine in einem Kennfeld festgelegt, da bei Teillast die Gaskraft geringer ist als bei Vollast und daher auch der bei einem Verbrennungsaussetzer auftretende Energie-Fehlbetrag geringer ist, so daß der Schwellenwert niedriger sein muß als bei Vollast, und die Reibungskräfte drehzahlabhängig sind.

In einer bevorzugten Ausgestaltung des erfindungsgemäßen Verfahrens kommt eine Vorsteuerung zum Einsatz, die jeweils immer vor Abfrage der Differenzwerte für jeden Zylinder auf Überschreiten der Schwellenwerte durchlaufen wird. Diese Vorsteuerung hat die Aufgabe, Fehl-Erkennungen, d.h. Auslösen einer Fehlermeldung trotz ordnungsgemäßer Verbrennung, so weit wie möglich auszuschalten. Insbesondere in Grenzsituationen, die vom normalen Fahrbetrieb abweichen, kann es häufig zu Fehl-Erkennungen kommen. So können sehr schnelle Lastanstiege z.B. bei plötzlichem Gasgeben die Brennkraftmaschine und den Antriebsstrang in gedämpfte Schwingung versetzen, die sich dem Verlauf der Kurbelwellendrehzahl überlagern. Diese nicht zu vermeidenden Schwingungen können zu einer Fehl-Erkennung von "Verbrennungsaussetzern" führen, die in ihrer Häufigkeit dann kritisch wird, wenn das plötzliche Gasgeben mehrfach in kurzer Folge wiederholt wird. Durch unsachgemäße Betätigung des Kupplungspedals kann es ebenfalls zu Grenzsituationen kommen, in der die Kurbelwellendrehzahl eine sehr große Beschleunigung oder Abbremsung erfährt und sich die nachfolgenden gedämpften Schwingungen einstellen.

Die Vorsteuerung des erfindungsgemäßen Verfahrens arbeitet nun so, daß innerhalb einer vorgebbaren Zeit die Änderung der Last und/oder Drehzahl berechnet wird, die berechnete Änderung mit einem vorgebbaren Grenzwert verglichen wird und bei Überschreiten eines Grenzwertes der vorbestimmte Schwellenwert über eine vorgebbare Zeitdauer erhöht wird. Durch diese Maßnahmen können Fehl-Erkennungen in einfacher Art und Weise vermieden werden, da sowohl das Lastsignal als auch die Kurbelwellendrehzahl, wie für digitale Motorsteuerungssysteme bekannt, auf schnelle zeit- oder kurbelwinkelbezogene Änderungen einfach überprüfbar sind. Alternativ kann zur Feststellung großer Drehzahländerungen die innerhalb des Verfahrens während jedes Motorarbeitsspiels berechnete mittlere Drehzahlquadrat-Änderungen herangezogen werden. Die Höhe der jeweiligen Grenzwerte zur Auslösung der Vorsteuerung wird dabei jeweils so gewählt, daß die Erkennung tatsächlich auftretender Verbrennungsaussetzer nicht eingeschränkt wird.

Um eine optimale Fehler-Erkennung zu gewährleisten, werden die vorgebbaren Grenzwerte und/oder die vorgebbare Zeitdauer der Schwellenwert-Anhebung in Abhängigkeit des Betriebszustandes der Brennkraftmaschine festgelegt.

In einer vorteilhaften Ausgestaltung des erfindungsgemäßen Verfahrens werden die Schwellenwerte derart vorgesteuert, daß, nachdem die Momentandrehzahl und/oder die momentane Last mit vorgebbaren unteren und/oder oberen Grenzwerten verglichen worden ist, bei Unterschreiten bzw. Überschreiten eines unteren bzw. oberen Grenzwertes der vorbestimmte Schwellenwert über eine vorgebbare Zeitdauer erhöht wird. Mit diesen Maßnahmen wird erreicht, daß in Grenzbereichen des Motorbetriebs-Kennfeldes häufig auftretende Fehl-Erkennungen unterdrückt werden. Dies ist beispielsweise sinnvoll im Bereich einer oberen Drehzahlbegrenzung, in dem die Kraftstoffzufuhr unterbrochen wird, oder im Schubbetrieb mit Schubabschaltung. Ein weiterer Grenzbereich liegt dann vor, wenn die Motordrehzahl weit unter die Leerlaufdrehzahl absinkt, was insbesondere dann vorkommt, wenn bei langsam rollendem Fahrzeug unsachgemäß in einen großen Gang geschaltet wird. In diesem Betriebszustand schwanken die Energieumsätze der einzelnen Zylinder derart, daß eine exakte Fehler-Erkennung nicht mehr möglich ist.

In einer weiteren vorteilhaften Ausgestaltung des erfindungsgemäßen Verfahrens werden Änderungen der Schwellenwerte von hohen zu niedrigen Werten in ihrer Geschwindigkeit begrenzt. Dazu werden fortlaufend die Differenzwerte zwischen aufeinanderfolgenden Schwellenwerten gebildet und bei abfallendem Schwellenwert der Differenzwert mit vorgebbaren Differenzgrenzwerten verglichen. Bei Überschreiten eines Differenzgrenzwerts wird die Änderungsgeschwindigkeit der Schwellenwerte derart begrenzt, daß der Abfall von einem Schwellenwert zum nächsten maximal dem vorgebbaren Differenzgrenzwert entspricht. Die Differenzgrenzwerte können in Abhängigkeit vom Motorbetriebszustand vorgegeben werden. Dadurch ist es möglich, Fehl-Erkennungen aufgrund der bereits oben beschriebenen gedämpft abklingenden Drehzahlschwingungen (z.B. infolge eines Gasstoßes) zu unterdrücken. Ebenfalls werden Fehl- Erkennungen eliminiert, die bei schnellem Lastabfall auftreten würden, falls die die Verbrennung charakterisierenden Testgrößen verzögert kleinere Werte annehmen und damit die dem geringen Lastzustand entsprechenden Schwellenwerte überschritten werden würden.

Das erfindungsgemäße Verfahren kann durch entsprechende Erweiterung der heute üblichen digitalen Motorsteuergeräte, in denen das Zahn- und das Phasensignal bereits für die zylinderselektive Steuerung der Zündung und der Kraftstoffeinspritzung verfügbar sind, ohne zusätzliche Sensoren durchgeführt werden.

Vorrichtungen zur Durchführung des erfindungsgemäßen Verfahrens sind in den Ansprüchen 10 bis 14 angegeben.

Ausführungsbeispiele der Erfindung werden im folgenden unter Bezugnahme auf die Zeichnungen beschrieben:

Fig. 1    ist eine schematische Darstellung einer elektronischen Steuerungsanlage mit Verbrennungsaussetzer-Erkennung für eine gemischverdichtende Mehrzylinder-Brennkraftmaschine,

Fig. 2    ist eine schematische Darstellung des Anlasserzahnkranzes der Brennkraftmaschine,

Fig. 3    zeigt den Programmablauf in der Recheneinheit zur Erkennung von Verbrennungsaussetzern,

Fig. 4    zeigt für ein Arbeitsspiel einer 8-Zylinder-Viertakt-Brennkraftmaschine die Lage und die zeitliche Dauer der Kurbelwinkelbereiche und die daraus berechneten $n^2$-Werte,

Fig. 5    ist ein Diagramm, aus dem der Verlauf des Quadrates der Momentan-Drehzahl während eines Arbeitsspiels einer 8-Zylinder-Viertakt-Brennkraftmaschine ohne Dynamik-Kompensation hervorgeht,

Fig. 6    ist ein Diagramm entsprechend Fig. 5, jedoch mit Dynamik-Kompensation des Drehzahlquadrat-Verlaufs über ein Arbeitsspiel,

Fig. 7    zeigt den Programmablauf in der Recheneinheit zur Erkennung von Verbrennungsaussetzern mit zwischengeschalteter Vorsteuerung der Erkennungsschwellen,

Fig. 8a    ist ein Diagramm, aus dem der Verlauf der Motorlast über mehrere Arbeitsspiele einer 8-Zylinder-Viertakt-Brennkraftmaschine infolge eines Gasstoßes hervorgeht,

Fig. 8b    ist ein Diagramm, das den zu Fig. 8a korrespondierenden Verlauf der Kurbelwellendrehzahl darstellt,

Fig. 8c    zeigt ein Diagramm, aus dem der Verlauf der ermittelten Schwellenwerte mit Vorsteuerungsmaßnahmen hervorgeht,

Fig. 8d    zeigt ein Diagramm, aus dem der Verlauf der ermittelten Schwellenwerte ohne Vorsteuerungsmaßnahmen hervorgeht,

Fig. 9    zeigt ein Diagramm, aus dem der Verlauf der Kurbelwellendrehzahl bei unsachgemäßem Einkuppeln im unteren Drehzahlbereich hervorgeht,

Fig. 10    zeigt ein Diagramm, in dem die Grenzbereiche des Last-Drehzahl-Kennfeldes angegeben sind, innerhalb derer eine Vorsteuerung der Schwellenwerte erfolgt, und

Fig. 11    zeigt eine Matrix, aus der Gewichtsfaktoren für Verbrennungsaussetzer in Abhängigkeit von Last und Drehzahl hervorgehen.

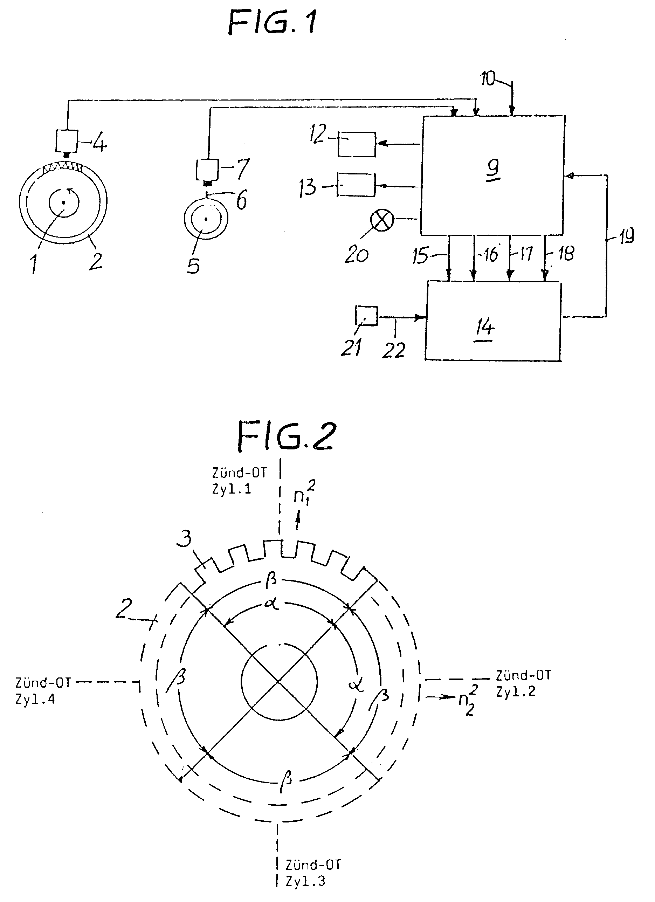

In Fig. 1 ist mit 1 die Kurbelwelle einer Viertakt-Brennkraftmaschine bezeichnet, auf der ein Zahnrad 2 angebracht ist, dessen Zähne 3 (Fig. 2) bzw. Zahnflanken als Signalgeber mit einem ersten Sensor 4 zusammenwirken. In Fig. 2 ist mit $\beta$ der Zündabstand zwischen nacheinander zündenden Zylindern bezeichnet. Bei diesem Ausführungsbeispiel ist die Segmentbreite $\alpha$ für die Ermittlung der Momentandrehzahl gleich dem Zündabstand. In diesem Fall fällt das Ende jedes Kurbelwinkelbereichs $\alpha$ mit dem Anfang des nächsten zusammen, so daß nur eine der Anzahl der Zylinder entsprechende Anzahl von Markierungen vorgesehen werden muß. Die Segmentbreite $\alpha$ kann jedoch auch von dem Zündabstand $\beta$ abweichen.

Die Kurbelwelle 1 treibt mit halber Kurbelwellendrehzahl eine Nockenwelle 5 an, die eine Phasenmarke 6 trägt, welche mit einem zweiten Sensor 7 zusammenwirkt. Der Sensor 4 führt das Zahnsignal einem digitalen Steuergerät 9 zu. Der zweite Sensor 7 erhält von der Phasenmarke 6 nach jeder Umdrehung der Nockenwelle 5, also nach jeder zweiten Umdrehung der Kurbelwelle 1, ein Signal, das ebenfalls dem Steuergerät 9 zugeführt wird. Das Steuergerät 9, das durch eine Leitung 10 ein lastabhängiges Signal erhält, ermittelt aus den Eingangssignalen für jeden Zylinder den Einspritzzeitpunkt und die Einspritzmenge sowie den Zündzeitpunkt und überträgt entsprechende Signale an eine elektronische Einspritzvorrichtung 12 und eine elektronische Zündvorrichtung 13. Insoweit entspricht die Vorrichtung gemäß Fig. 1 einer bekannten digitalen Motorsteuerung. Zusätzlich ist eine Recheneinheit 14 vorgesehen, die durch eine erste Leitung 15 das Zahnsignal von dem ersten Sensor 4, durch eine zweite Leitung 16 das Phasensignal von dem zweiten Sensor 7, durch eine dritte Leitung 17 das Motordrehzahlsignal und durch eine vierte Leitung 18 das Motorlast-Signal erhält. Die dritte Leitung 17 könnte auch entfallen, da die Kurbelwellendrehzahl innerhalb der Recheneinheit über das Zahnsignal und das Phasensignal jeweils berechnet wird. Weiterhin ist über eine fünfte Leitung 22 ein Beschleunigungssensor 21 an die Recheneinheit 14 angeschlossen.

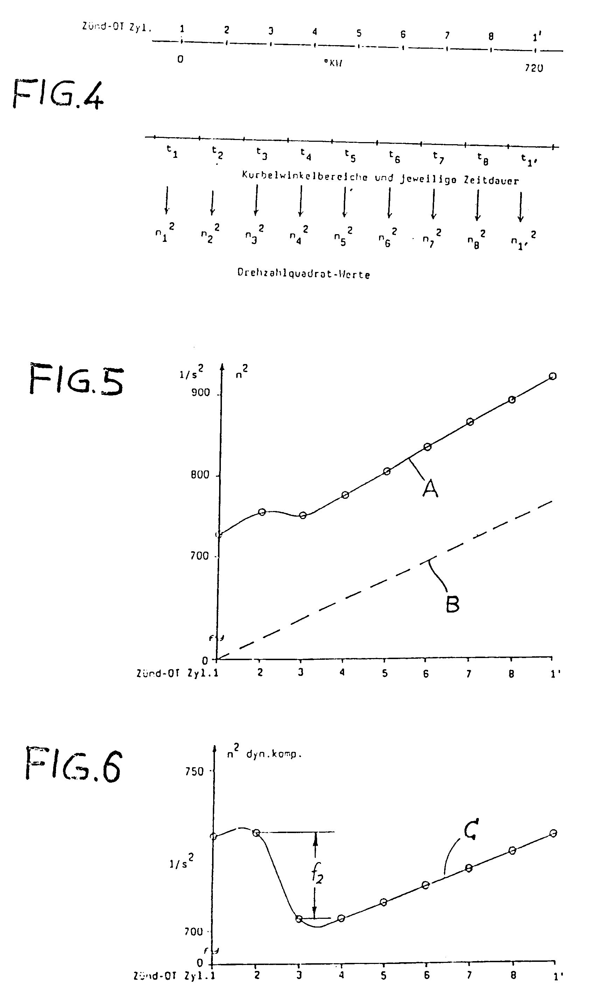

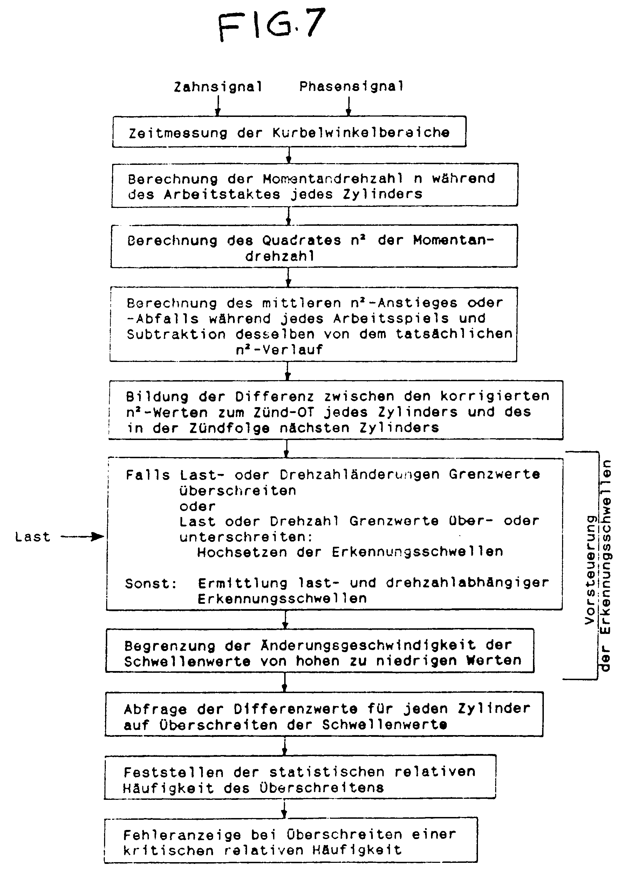

In der Recheneinheit 14 wird aus dem Zahnsignal und dem Phasensignal für jeden Zylinder der Kurbelwinkelbereich $\alpha$ (Fig. 2) bestimmt, dessen Zeitdauer durch Zählen der in ihn fallenden Impulse eines in der Recheneinheit vorhandenen Impulsgebers ermittelt wird, und es wird für jeden Zylinder aus der Zeitdauer die Momentandrehzahl berechnet und deren Quadrat $n^2$ gebildet, wie dies in Fig. 4 schematisch dargestellt ist. Dabei bedeutet $n_1^2$ den momentanen Drehzahlquadrat-Wert für den Zylinder 1 vor Arbeitsleistung durch die Gaskraft, $n_2^2$ den entsprechenden Wert für den Zylinder 2, der zugleich den $n^2$-Wert für den Zylinder 1 nach Arbeitsleistung von dessen Gaskraft darstellt usw. Ein eventuell auftretender Energieabfall im Zylinder 1 durch aussetzende Verbrennung wird durch die Differenz

$$(\Delta n^2)_1 = n_1^2 - n_2^2$$

erfaßt, wobei diese Größe bei einem $n^2$-Abfall positiv ist.

Im stationären Motorbetrieb können die Größen $(\Delta n^2)_i$ (i = 1 ....z, z = Zylinderzahl der Brennkraftmaschine) zur Erkennung von Verbrennungsaussetzern herangezogen werden, da im Falle eines Aussetzers im Zylinder i der Wert von $(\Delta n^2)_i$ einen Schwellwert überschreitet. Für eine zuverlässige Verbrennungsaussetzer-Erkennung im dynamischen Motorbetrieb ist jedoch eine Korrektur erforderlich, da bei Beschleunigung eine $n^2$-Zunahme erfolgt, die sich einem durch Aussetzer bewirkten $n^2$-Abfall überlagert. Da andererseits beim Abbremsen ein $n^2$-Abfall auftritt, könnte dies bei einem fehlerfreien Motor zu einer Fehldiagnose führen.

Um diese dynamischen Einflüsse zu kompensieren, wird vom $n^2$-Verlauf innerhalb eines jeden Arbeitsspiels der Brennkraftmaschine der mittlere lineare $n^2$-Anstieg bzw. -Abfall in diesem Arbeitsspiel subtrahiert. Bezeichnet man mit $n_1{}^2$ und $n_1,{}^2$ die momentanen Drehzahlquadrat-Werte für den ersten Zylinder in zwei aufeinanderfolgenden Arbeitsspielen, so gibt die Formel

$$\Delta_{AS}n^2 \;=\; n_1,{}^2 - n_1{}^2$$

die mittlere dynamische $n^2$-Änderung im ersten der beiden Arbeitsspiele an.

Die korrigierten zylinderselektiven Testgrößen $f_i$ zur Erkennung von Verbrennungsaussetzern sind damit

$$f_i \;=\; n_i{}^2 \;-\; \frac{i-1}{z}\;\Delta_{AS}n^2 \;-\; \left(n_{i+1}{}^2 \;-\; \frac{i}{z}\,\Delta_{AS}n^2\right)$$

$$=\; (\Delta n^2)_i \;+\; \frac{1}{z}\;\Delta_{AS}n^2$$

i = 1 ...z (z:Zylinderzahl).

Die mittlere lineare $n^2$-Änderung innerhalb eines Motorarbeitsspiels kann auch aus den momentanen Drehzahlquadrat-Werten für einen anderen als den ersten Zylinder in zwei aufeinanderfolgenden Arbeitsspielen gebildet werden. Allgemein können zur Korrektur der Größen $(\Delta n^2)_i$ jeweils die Drehzahlquadrat-Werte eines anderen Zylinders zur Berechnung der mittleren linearen $n^2$-Änderung innerhalb von zwei Motorumdrehungen verwendet werden.

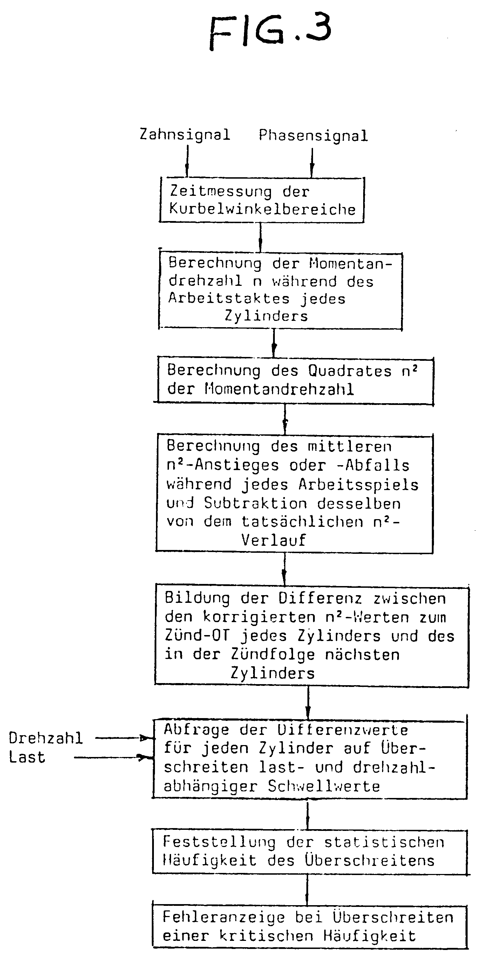

In Fig. 3 ist der Programmablauf in der Recheneinheit 14 dargestellt. Werden von der Recheneinheit Verbrennungsaussetzer mit einer größeren als der kritischen Häufigkeit festgestellt, so gibt sie über eine Leitung 19 ein Signal an das Steuergerät 9, das eine Fehlerleuchte 20 aufleuchten läßt und/oder andere Maßnahmen einleitet.

In Fig. 5 ist mit A der $n^2$-Verlauf während eines Arbeitsspiels einer 8-Zylinder-Viertakt-Brennkraftmaschine während eines Beschleunigungsvorganges dargestellt, wobei angenommen ist, daß im Zylinder 2 keine Verbrennung stattfindet. Der $n^2$-Abfall nach dem Zylinder 2 ist von dein $n^2$-Anstieg durch den Beschleunigungsvorgang überlagert und daher nicht sehr ausgeprägt.

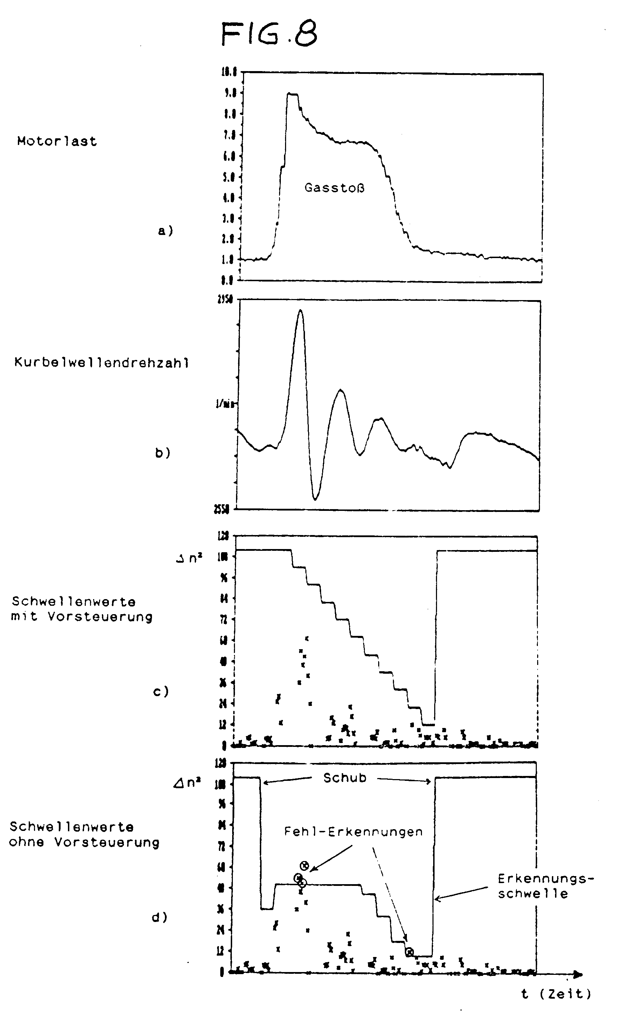

Um eine eindeutige Aussetzer-Erkennung zu erreichen, wird der mittlere lineare $n^2$-Anstieg während jedes Arbeitsspiels der Brennkraftmaschine errechnet. Dieser mittlere lineare Verlauf ist durch die Kurve B veranschaulicht. Wird nun von dem tatsächlichen $n^2$-Verlauf A der lineare $n^2$-Anstieg gemäß Kurve B (bzw. bei einem Abbremsen des Fahrzeuges ein entsprechender $n^2$-Abfall) subtrahiert, so ergibt sich der in Fig. 6 dargestellte dynamisch kompensierte $n^2$-Verlauf C, der nun sehr deutlich einen Aussetzer im Zylinder 2 erkennen läßt.

Es sei noch bemerkt, daß in den Fig. 2, 4, 5 und 6 die Zylinder fortlaufend entsprechend ihrer Zündfolge und nicht, wie üblich, entsprechend ihrer Anordnung numeriert wurden.

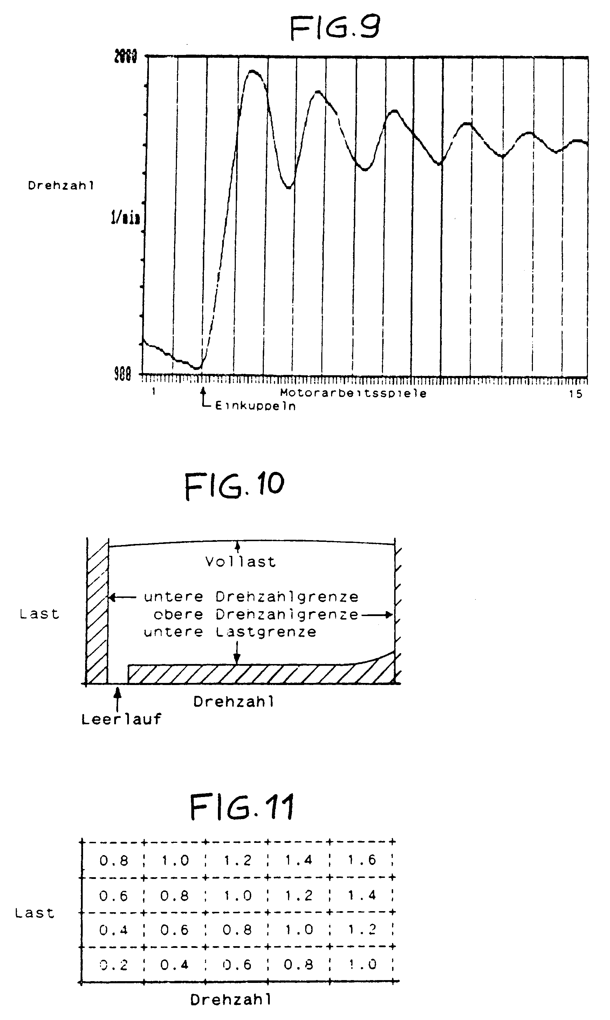

Der in Fig. 7 dargestellte Programmablauf in der Recheneinheit zur Erkennung von Verbrennungsaussetzern unterscheidet sich von dem in Fig. 3 dargestellten Programmablauf dadurch, daß eine Vorsteuerung der Erkennungsschwellen durchlaufen wird. Diese Vorsteuerung setzt ein nach der Bildung der Differenz zwischen den korrigierten $n^2$-Werten zum Zünd-OT jedes Zylinders und des in der Zündfolge nächsten Zylinders. Innerhalb der Vorsteuerung wird überprüft, ob die Last- oder Drehzahländerungen Grenzwerte überschreiten oder ob die Last oder Drehzahl selbst Grenzwerte über- oder unterschreiten. In diesem Fall wird die Erkennungsschwelle künstlich hochgesetzt. Die Grenzwerte können hierbei abhängig von der Last und der Drehzahl vorgegeben werden. Werden die Grenzwerte nicht überschritten, so werden, wie in dem Programmablauf nach Fig. 3, die last- und drehzahlabhängigen Erkennungsschwellen ermittelt. Sodann wird die Änderungsgeschwindigkeit der Schwellenwerte von hohen zu niedrigen Werten begrenzt für den Fall, daß die Differenz aufeinanderfolgender Schwellenwerte einen vorgegebenen Differenzgrenzwert überschreitet. Der sich daran anschliessende Programmablauf entspricht dann dem in Fig. 3 dargestellten Ablauf.

In Fig. 8a ist der Verlauf der Motorlast infolge eines plötzlich auftretenden Gasstoßes über der Zeit (Arbeitsspiele) der Brennkraftmaschine aufgetragen. Der Verlauf der Motorlast ist durch einen sehr steilen Anstieg im vorderen Bereich gekennzeichnet, der nach einer Überschwingphase in einen horizontalen Bereich ausschwingt und nach kurzer Dauer wieder stark abfällt. Der Einfluß dieses Gasstoßes auf den Verlauf der Kurbelwellendrehzahl ist in dem darüberliegenden Diagramm dargestellt (Fig. 8b). Deutlich ist ein starker Anstieg der Drehzahl korrespondierend zu dem starken Anstieg der Motorlast zu erkennen. Dieser steile Anstieg klingt dann im Verlauf einer gedämpften Schwingung aus. Die zu diesem Kurbelwellendrehzahlverlauf berechneten $\Delta n^2$-Werte sind in den beiden darüberliegenden Diagrammen (Fig. 8c, d) durch Kreuze dargestellt. Die durchgezogene Linie zeigt den im vorliegenden Ausführungsbeispiel jeweils pro Arbeitsspiel der Brennkraftmaschine ermittelten Schwellenwert. Legt man die für normalen Fahrbetrieb vorbestimmten Schwellenwerte zugrunde, so ergibt sich der in Fig. 8d dargestellte Verlauf. Rei den dem Lastanstieg folgenden Arbeitsspielen kommt es jedoch zu Fehl-Erkennungen, die auf das gedämpfte Abklingen der infolge des Gasstoßes auftretenden Drehzahlschwingungen zurückzuführen sind.

Diese Fehl-Erkennung von "Verbrennungsaussetzern" wird hinsichtlich der Überschreitung der kritischen Häufigkeitsschwelle dann problematisch, wenn das plötzliche Gasgeben mehrfach in kurzer Folge wiederholt wird. Es besteht dann die Gefahr, daß die Fehleranzeige ausgelöst wird, ohne daß die kritische Häufigkeitsschwelle der Verbrennungsaussetzer tatsächlich überschritten wird.

In Fig. 8c ist dargestellt, wie diesem Problem mittels Vorsteuerung der Schwellenwerte begegnet werden kann. So wird im Bereich des starken Lastanstiegs bzw. des starken Anstiegs der Kurbelwellendrehzahl der Schwellenwert erhöht und im Verlauf weiterer Arbeitsspiele treppenförmig abgeregelt, wobei für jedes Arbeitsspiel ein konstanter Schwellenwert zugrunde gelegt wird. Die Begrenzung der Änderungsgeschwindigkeit der Schwellenwerte erfolgt im Beispiel der Fig. 8c durch einen Differenzgrenzwert von 10 für aufeinanderfolgende Schwellenwerte und kann in Abhängigkeit vom Betriebszustand der Brennkraftmaschine erfolgen.

In Fig. 9 ist eine andere Grenzsituation dargestellt, bei der es zu einem raschen Anstieg der Drehzahl mit anschließend gedämpft ausschwingendem Verlauf kommt, bei dem es, wie oben dargestellt, zu Fehl-Erkennungen kommen kann. Dargestellt ist der Verlauf der Drehzahl, wie er sich einstellt, wenn das Fahrzeug geraume Zeit in ausgekuppeltem Zustand rollt, so daß sich nahezu die Leerlaufdrehzahl einstellt, und sodann unsachgemäß eingekuppelt wird. Auch in diesem Fall lassen sich Fehl-Erkennungen durch Einsatz der oben beschriebenen Vorsteuerungsmaßnahmen vermeiden, hier speziell durch Überwachung einer Grenzwertüberschreitung der Drehzahl-Änderung.

Das Motorbetriebs-Kennfeld besitzt Grenzbereiche, in denen ein Erkennungsverfahren für Verbrennungsaussetzer nicht sinnvoll eingesetzt werden kann. Werden diese Grenzbereiche erreicht, so greift beim erfindungsgemäßen Verfahren eine Vorsteuerung, die die Schwellenwerte abhängig vom Betriebskennfeld erhöht festlegt. Diese kritischen Grenzbereiche sind in Fig. 10 schraffiert dargestellt. So ist insbesondere im Bereich der oberen Drehzahlbegrenzung eine Verbrennungsaussetzer-Erkennung nicht sinnvoll, da dort die Kraftstoffzufuhr unterbrochen ist. Dieser Bereich ist in Fig. 10 am rechten Rand schraffiert angelegt. Ein weiterer Grenzbereich ist am linken Rand des Kennfeldes schraffiert eingezeichnet, bei dem nämlich die Motordrehzahl weit unter dem Wert der Leerlaufdrehzahl liegt. Dieser Grenzfall wird z.B. dann erreicht, wenn bei langsam rollendem Fahrzeug unsachgemäß in einen hohen Gang eingekuppelt wird. In diesem Betriebszustand der Brennkraftmaschine ist eine sinnvolle Fehler-Erkennung nicht mehr möglich. Schließlich greift auch im Schubbetrieb mit Schubabschaltung die Vorsteuerung, die in diesem Fall erhöhte Schwellenwerte festlegt.

Die Erkennung von Verbrennungsaussetzern erfolgt mit dem Ziel, den Fahrer bei erhöhter Schadstoffemission infolge von Aussetzern Sowie bei Gefährdung des Katalysators zu warnen und zu Reparaturmaßnahmen in der Werkstatt zu veranlassen. Im Hinblick auf schlechte Abgasqualität und Katalysatorschädigung sind Verbrennungsaussetzer umso schädlicher, je höher die Motordrehzahl und die Motorlast sind, bei welchen sie auftreten. Diese Abhängigkeit wird bei der Berechnung der relativen Häufigkeiten, die bei Überschreitung einer kritischen Häufigkeitsschwelle eine Fehleranzeige zur Folge haben, dadurch berücksichtigt, daß die auftretenden Verbrennungsaussetzer abhängig von Last und Drehzahl gewichtet werden.

Bei der Berechnung der relativen Häufigkeit wird als Bezugsgröße eine vorgegebene Anzahl von Motor-Umdrehungen (z.B. 1000) gewählt. Würde man nun jedem auftretenden Verbrennungsaussetzer die gleiche Wertigkeit zuordnen, würde die Fehleranzeige allein von der Anzahl der Verbrennungsaussetzer abhängen, ohne zu berücksichtigen, daß Verbrennungsaussetzer im niederen Last-/Drehzahlbereich weit weniger schädlich sind als Verbrennungsaussetzer im hohen Last-/Drehzahlbereich. Deshalb werden erfindungsgemäß die Verbrennungsaussetzer abhängig von Last und Drehzahl vor ihrer Aufsummierung mit Wichtungsfaktoren multipliziert. In Fig. 11 ist ein Beispiel für eine Wichtungsmatrix über dem Kennfeld dargestellt. Gegenüber der normalen Wertigkeit von 1 werden die Verbrennungsaussetzer im unteren Last- und Drehzahlbereich mit dem Faktor 0,2 multipliziert, der mit zunehmender Drehzahl und Last erhöht wird und schließlich den Maximalwert von 1,6 erreicht.

In einer erfindungsgemäßen weiteren Ausgestaltung des Verfahrens wird die Aussetzererkennung gänzlich innerhalb einer vorgebbaren Zeitdauer unterdrückt, falls der Recheneinheit über einen Sensor ein Signal zugeht, aus welchem sich ableiten läßt, daß der Verlauf der Kurbelwellendrehzahl von Einflüssen aus starken Fahrbahnunebenheiten beeinflußt wird, so daß eine ordnungsgemäße Erkennung von Verbrennungsaussetzern nicht mehr möglich ist. Dieses Signal kann aus bereits im Fahrzeug vorhandenen geeigneten Sensorsignalen abgeleitet werden oder mit Hilfe von einem oder mehreren zusätzlichen Weg- bzw. Beschleunigungsaufnehmern 21 (Fig. 1) erzeugt werden.

**Patentansprüche**

1. Verfahren zur zylinderselektiven Überwachung des Energieumsatzes bei einer Mehrzylinder-Brennkraftmaschine, bei dem die Kurbelwellenstellung identifiziert und während des Arbeitstaktes jedes Zylinders über einen bestimmten Kurbelwellen-Drehwinkel die Momentandrehzahl ermittelt wird, **gekennzeichnet durch folgende Verfahrensschritte:**
   a) es wird das Quadrat $n^2$ der Momentandrehzahl gebildet,
   b) es werden über ein Arbeitsspiel der Brennkraftmaschine für jeden Zylinder i, i = 1...z, z = Zylinderzahl, sowie für den durch i = z+1 bezeichneten ersten Zylinder des darauffolgenden Arbeitsspiels die $n_i^2$-Werte bestimmt,
   c) es wird für einen bestimmten Zylinder j die Differenz

   $$\Delta_{AS}n^2 = n_{j,}^2 - n_j^2$$

   gebildet, wobei $n_{j,}^2$ der Drehzahlquadrat-Wert des Zylinders j im darauffolgenden Arbeitsspiel ist,
   d) es wird für i = 1...z+1 der jeweils dynamisch korrigierte Drehzahlquadrat-Wert $n_i^2{}_{korr}$ gebildet nach

   $$n_i{}^2{}_{korr} = n_i{}^2 - \frac{i-1}{z}\, \Delta_{AS}n^2 \ ,$$

   e) es wird der Differenzwert $f_i$ gebildet nach

   $$f_i = n_i^2{}_{korr} - n_{i+1}^2{}_{korr} \ , \ i = 1...z \ ,$$

   f) es werden die Differenzwerte $f_i$ mit vorbestimmten Schwellenwerten zur Erkennung eines fehlerhaften Energieumsatzes verglichen, und
   g) es werden die relativen Häufigkeiten fehlerhafter Energieumsätze in allen Zylindern ermittelt, wobei im Fall der Überschreitung einer kritischen Häufigkeitsschwelle eine Fehleranzeige ausgelöst wird.

2. Verfahren zur zylinderselektiven Überwachung des Energieumsatzes bei einer Mehrzylinder-Brennkraftmaschine, bei dem die Kurbelwellenstellung identifiziert und während des Arbeitstaktes jedes Zylinders über einen bestimmten Kurbelwellen-Drehwinkel die Momentandrehzahl ermittelt wird, **dadurch gekennzeichnet,** daß
   a) das Quadrat $(n^2)$ der Momentandrehzahl gebildet,
   b) für jeden Zylinder die Differenz zwischen dem gemäß a) ermittelten tatsächlichen $n^2$-Wert zum Zünd-OT dieses Zylinders und dem $n^2$-Wert zum Zünd-OT des in der Zündfolge nächsten Zylinders gebildet
   c) diese Differenz durch den jeweiligen Anteil des mittleren $n^2$-Anstiegs oder -Abfalls während eines Arbeitsspiels der Brennkraftmaschine, der sich aus der Differenz des $n^2$-Wertes zum Zünd-OT eines Zylinders innerhalb des Arbeitsspieles und dem $n^2$-Wert desselben Zylinders zu dessen darauffolgendem Zünd-OT ergibt, korrigiert wird,

d) die korrigierten Differenzwerte mit vorbestimmten Schwellenwerten zur Erkennung eines fehlerhaften Energieumsatzes verglichen werden, und

e) die relativen Häufigkeiten fehlerhafter Energieumsätze in allen Zylindern ermittelt werden, wobei im Fall der Überschreitung einer kritischen Häufigkeitsschwelle eine Fehleranzeige ausgelöst wird.

3. Verfahren nach Anspruch 1 oder 2, dadurch gekennzeichnet, daß die vorbestimmten Schwellenwerte in Abhängigkeit von der Last und der Drehzahl der Brennkraftmaschine festgelegt werden.

4. Verfahren nach einem der Ansprüche 1 bis 3, dadurch gekennzeichnet, daß die Ermittlung der Momentandrehzahl im wesentlichen über einen dem Zündabstand entsprechenden Kurbelwellen-Drehwinkel erfolgt.

5. Verfahren nach einem der Ansprüche 1 bis 4, dadurch gekennzeichnet, daß

a) innerhalb einer vorgebbaren Zeit die Änderung der Last- und/oder Drehzahl berechnet wird,

b) die berechnete Änderung mit vorgebbaren Grenzwerten verglichen wird und

c) bei Überschreiten eines Grenzwertes der vorbestimmte Schwellenwert über eine vorgebbare Zeitdauer erhöht wird.

6. Verfahren nach einem der Ansprüche 1 bis 5, dadurch gekennzeichnet, daß

a) die Momentandrehzahl und/oder die momentane Last mit vorgebbaren unteren und oberen Grenzwerten verglichen werden und

b) bei Unterschreiten bzw. Überschreiten eines vorgebbaren unteren bzw. oberen Grenzwertes der vorbestimmte Schwellenwert über eine vorgebbare Zeitdauer erhöht wird.

7. Verfahren nach Anspruch 5 oder 6, dadurch gekennzeichnet, daß die vorgebbaren Grenzwerte und/oder die vorgebbare Zeitdauer in Abhängigkeit vom Betriebszustand der Brennkraftmaschine festgelegt werden.

8. Verfahren nach einem der Ansprüche 1,2,3,5 und 6, dadurch gekennzeichnet, daß

a) die Differenz zwischen aufeinanderfolgenden Schwellenwerten gebildet wird,

b) bei abfallendem Schwellenwert der Differenzwert mit vorgebbaren Differenzgrenzwerten verglichen wird, und

c) bei Überschreiten eines Differenzgrenzwerts die Änderungsgeschwindigkeit der Schwellenwerte begrenzt wird, derart, daß der Abfall von einem Schwellenwert auf den nächsten maximal dem vorgebbaren Differenzgrenzwert entspricht.

9. Verfahren nach Anspruch 8, dadurch gekennzeichnet, daß die Differenzgrenzwerte für aufeinanderfolgende Schwellenwerte in Abhängigkeit vom Betriebszustand der Brennkraftmaschine festgelegt werden.

10. Vorrichtung zur Durchführung des Verfahrens nach Anspruch 1 mit

a) einer ersten Einrichtung zur Identifizierung der Kurbelwellenstellung und

b) einer zweiten Einrichtung zum Erfassen der Momentandrehzahl der Brennkraftmaschine über einen bestimmten Kurbelwellen-Drehwinkel während des Arbeitstaktes jedes Zylinders,

**gekennzeichnet durch**

c) eine dritte Einrichtung zur Berechnung des Quadrates $n^2$ der Momentandrehzahl,

d) eine vierte Einrichtung zur Bestimmung der $n_i^2$-Werte über ein Arbeitsspiel der Brennkraftmaschine für jeden Zylinder i, i = 1...z, z = Zylinderzahl, sowie für den durch i = z + 1 bezeichneten ersten Zylinder des darauffolgenden Arbeitsspiels,

e) eine fünfte Einrichtung zur Bildung der Differenz

$$\Delta_{AS}n^2 = n_{j'}^2 - n_j^2$$

für einen bestimmten Zylinder j, wobei $n_{j'}^2$ der Drehzahlquadrat-Wert des Zylinders j im darauffolgenden Arbeitsspiel ist,

zur Bildung des jeweils dynamisch korrigierten Drehzahlquadrat-Wertes $n_i^2{}_{korr}$ nach

$$n_1{}^2{}_{korr} = n_1{}^2 - \frac{i-1}{z} \triangle_{AS} n^2$$

für i = 1...z + 1

sowie zur Bildung des Differenzwertes $f_i$ nach

$f_i = n_i{}^2{}_{korr} - n_{i+1}{}^2{}_{korr}$ , i = 1...z ,

f) eine sechste Einrichtung zum Vergleich der Differenzwerte $f_i$ mit vorbestimmten Schwellenwerten zur Erkennung eines fehlerhaften Energieumsatzes und

g) eine siebte Einrichtung zur Ermittlung der relativen Häufigkeiten fehlerhafter Energieumsätze in allen Zylindern, wobei im Fall der Überschreitung einer kritischen Häufigkeitsschwelle eine Fehleranzeige ausgelöst wird.

11. Vorrichtung nach Anspruch 10, gekennzeichnet durch
    - eine erste Vorsteuereinrichtung mit
      a) einer achten Einrichtung zum Berechnen der Änderung der Last- und/oder Drehzahl innerhalb eines vorgebbaren Zeitintervalls,
      b) einer neunten Einrichtung zum Vergleichen der berechneten Änderung mit vorgebbaren Grenzwerten und
      c) einer zehnten Einrichtung zur Erhöhung des vorbestimmten Schwellenwerts bei Überschreiten eines Grenzwerts.

12. Vorrichtung nach Anspruch 10 oder 11, gekennzeichnet durch
    - eine zweite Vorsteuereinrichtung mit
      a) einer elften Einrichtung zum Vergleichen der Momentandrehzahl und/oder momentanen Last mit vorgebbaren unteren und/oder oberen Grenzwerten und
      b) einer zwölften Einrichtung zum Erhöhen des vorbestimmten Schwellenwerts über eine vorgebbare Zeitdauer bei Unter- bzw. Überschreiten des unteren bzw. oberen Grenzwerts.

13. Vorrichtung nach einem der Ansprüche 10 bis 12, gekennzeichnet durch
    - eine dritte Vorsteuereinrichtung mit
      a) einer dreizehnten Einrichtung zur Bildung der Differenz zwischen aufeinanderfolgenden Schwellenwerten,
      b) einer vierzehnten Einrichtung zum Vergleichen des Differenzwerts bei abfallendem Schwellenwert mit vorgebbaren Differenzgrenzwerten und
      c) einer fünfzehnten Einrichtung zum Begrenzen der Änderungsgeschwindigkeit der Schwellenwerte bei Überschreiten eines Differenzgrenzwertes derart, daß der Abfall von einem Schwellenwert auf den nächsten maximal dem vorgebbaren Differenzgrenzwert entspricht.

14. Vorrichtung nach einem oder mehreren der Ansprüche 10 bis 13, dadurch gekennzeichnet, daß alle Einrichtungen in einer gemeinsamen Recheneinheit integriert sind.

**Claims**

1. Method of monitoring the power output of the individual cylinders of a multi-cylinder internal combustion engine, wherein the crankshaft position is identified and during the working cycle of each cylinder the instantaneous speed is determined over a specific angle of rotation of the crankshaft, **characterized by the following process steps:**
   a) the square $n^2$ of the instantaneous speed is formed,
   b) throughout an operating cycle of the internal combustion engine the $n_i{}^2$ values are determined for each cylinder if i = 1...z, z = number of cylinders, as well as for the first cylinder designated i = z + 1 of the next operating cycle,
   c) for a specific cylinder j the difference

   $\triangle_{AS} n^2 = n_{j_1}{}^2 - n_j{}^2$

is formed, in which $n_j{}^2$ is the square value of the speed of the cylinder j in the next operating cycle,

d) for $i = 1...z+1$ the, in each case, dynamically corrected square value of the speed $n_i{}^2{}_{korr}$ is formed according to

$$n_i{}^2{}_{korr} = n_i{}^2 - \frac{i-1}{z} \Delta_{AS} n^2,$$

e) the difference value $f_i$ is formed according to

$$f_i = n_i{}^2{}_{korr} - n_{i+1}{}^2{}_{korr}, \quad i = 1...z,$$

f) the difference values $f_i$ are compared with predetermined threshold values in order to detect an incorrect power output, and

g) the relative frequencies of incorrect power outputs are determined in all cylinders and, in the event of a critical frequency threshold being exceeded, an error display is triggered.

2. Method of monitoring the power output of the individual cylinders of a multi-cylinder internal combustion engine, wherein the crankshaft position is identified and during the working cycle of each cylinder the instantaneous speed is determined over a specific angle of rotation of the crankshaft, characterized in that

a) the square ($n^2$) of the instantaneous speed is formed,

b) for each cylinder, the difference is formed between the actual $n^2$ value, determined according to a), at the ignition top dead centre of said cylinder and the $n^2$ value at the ignition top dead centre of the next cylinder in the firing sequence,

c) said difference is corrected by the respective fraction of the mean increase or decrease in $n^2$ during an operating cycle of the internal combustion engine, said fraction arising from the difference of the $n^2$ value at the ignition top dead centre of a cylinder within the operating cycle and the $n^2$ value of the same cylinder at its next ignition top dead centre,

d) the corrected difference values are compared with predetermined threshold values in order to detect an incorrect power output, and

e) the relative frequencies of incorrect power outputs are determined in all cylinders and, in the event of a critical frequency threshold being exceeded, an error display is triggered.

3. Method according to claim 1 or 2, characterized in that the predetermined threshold values are fixed as a function of the load and speed of the internal combustion engine.

4. Method according to one of claims 1 to 3, characterized in that determination of the instantaneous speed is effected substantially over an angle of rotation of the crankshaft corresponding to the firing interval.

5. Method according to one of claims 1 to 4, characterized in that

a) within a predeterminable time the change in the load and/or speed is calculated,

b) the calculated change is compared with predeterminable limit values and

c) upon a limit value being exceeded, the predetermined threshold value is increased over a predeterminable length of time.

6. Method according to one of claims 1 to 5, characterized in that

a) the instantaneous speed and/or the instantaneous load are compared with predeterminable lower and upper limit values and

b) upon a predeterminable lower or upper limit value being undershot or exceeded, the predetermined threshold value is increased over a predeterminable length of time.

7. Method according to claim 5 or 6, characterized in that the predeterminable limit values and/or the predeterminable length of time are fixed as a function of the operating state of the internal combustion engine.

**8.** Method according to one of claims 1, 2, 3, 5 and 6, characterized in that
   a) the difference between successive threshold values is formed,
   b) in the case of a decreasing threshold value the difference value is compared with predeterminable difference limit values, and
   c) upon a difference limit value being exceeded, the rate of change of the threshold values is limited in such a way that the decrease from one threshold value to the next corresponds at most to the predeterminable difference limit value.

**9.** Method according to claim 8, characterized in that the difference limit values for successive threshold values are fixed as a function of the operating state of the internal combustion engine.

**10.** Apparatus for effecting the method according to claim 1, having
   a) a first device for identifying the position of the crankshaft and
   b) a second device for detecting the instantaneous speed of the internal combustion engine over a specific angle of rotation of the crankshaft during the working cycle of each cylinder,
**characterized by**
   c) a third device for calculating the square $n^2$ of the instantaneous speed,
   d) a fourth device for determining the $n_i^2$ values over an operating cycle of the internal combustion engine for each cylinder i, i = 1...z, z = number of cylinders, as well as for the first cylinder, designated i = z + 1, of the next operating cycle,
   e) a fifth device for forming the difference

$$\Delta_{AS}n^2 = n_{j}^{2} - n_{j}^{2}$$

for a specific cylinder j, in which $n_j^2$ is the square value of the speed of the cylinder j in the next operating cycle,
for forming the, in each case, dynamically corrected square value of the speed $n_i^2{}_{korr}$ according to

$$n_i{}^2{}_{korr} = n_i{}^2 - \frac{i-1}{z} \Delta_{AS}n^2 ,$$

for i = 1...z + 1
as well as for forming the difference value $f_i$ according to

$$f_i = n_i^2{}_{korr} - n_{i+1}^2{}_{korr} , \quad i = 1...z ,$$

   f) a sixth device for comparing the difference values $f_i$ with predetermined threshold values in order to detect an incorrect power output and
   g) a seventh device for determining the relative frequencies of incorrect power outputs in all cylinders, an error display being triggered in the event of a critical frequency threshold being exceeded.

**11.** Apparatus according to claim 10, characterized by
   - a first precontrol device having
      a) an eighth device for calculating the change in the load and/or speed within a predeterminable interval of time,
      b) a ninth device for comparing the calculated change with predeterminable limit values and
      c) a tenth device for increasing the predetermined threshold value upon a limit value being exceeded.

**12.** Apparatus according to claim 10 or 11, characterized by
   - a second precontrol device having
      a) an eleventh device for comparing the instantaneous speed and/or instantaneous load with predeterminable lower and/or upper limit values and
      b) a twelfth device for increasing the predetermined threshold value over a predeterminable length of time upon undershooting of the lower and exceeding of the upper limit value.

**13.** Apparatus according to one of claims 10 to 12, characterized by
- a third precontrol device having
  a) a thirteenth device for forming the difference between successive threshold values,
  b) a fourteenth device for comparing the difference value in the case of a decreasing threshold value with predeterminable difference limit values and
  c) a fifteenth device for so limiting the rate of change of the threshold values upon a difference limit value being exceeded that the decrease from one threshold value to the next corresponds at most to the predeterminable difference limit value.

**14.** Apparatus according to one or more of claims 10 to 13, characterized in that all of the devices are integrated in a common arithmetic unit.

**Revendications**

**1.** Procédé de contrôle sélectif par cylindre de la conversion d'énergie sur un moteur à combustion interne à plusieurs cylindres, dans lequel la position du vilebrequin est identifiée et la vitesse de rotation instantanée est déterminée pendant le cycle de travail de chaque cylindre par rapport à un angle de rotation donné du vilebrequin, caractérisé par les phases de procédé suivantes:
  a) le carré $n^2$ de la vitesse de rotation instantanée est formé,
  b) les valeurs $n_i^2$ sont déterminées sur un cycle de fonctionnement du moteur à combustion interne pour chaque cylindre i, i = 1 ... z, z = nombre de cylindres, et pour le premier cylindre, référencé par i = z + 1, du cycle de fonctionnement suivant,
  c) la différence

$$\Delta_{AS}n^2 = n_{j,}^2 - n_j^2$$

est formée pour un cylindre donné j, $n_j^2$, étant la valeur quadratique de la vitesse de rotation du cylindre j dans le cycle de fonctionnement suivant,
  d) pour i = 1 ... z + 1, la valeur quadratique de la vitesse de rotation $n_{i\,corr}^2$, corrigée dynamiquement, est formée d'après l'expression

$$n_{i\,corr}^2 = n_i^2 - \frac{i-1}{z}\,\Delta_{AS}n^2,$$

  e) la valeur différentielle $f_i$ est formée suivant

$$f_i = n_{i\,corr}^2 - n_{i+1\,corr}^2, \quad i = 1 \ldots z,$$

  f) les valeurs différentielles $f_i$ sont comparées à des seuils prédéfinis pour l'identification d'une conversion d'énergie défectueuse,
  g) les fréquences relatives de conversions d'énergie défectueuses sont déterminées dans tous les cylindres, une indication de défaut étant déclenchée en cas de dépassement par le haut d'un seuil de fréquence critique.

**2.** Procédé de contrôle sélectif par cylindre de la conversion d'énergie sur un moteur à combustion interne à plusieurs cylindres, dans lequel la position du vilebrequin est identifiée et la vitesse de rotation instantanée est déterminée pendant le cycle de travail de chaque cylindre par rapport à un angle de rotation donné du vilebrequin, caractérisé en ce que
  a) le carré ($n^2$) de la vitesse de rotation instantanée est formé,
  b) pour chaque cylindre, la différence est formée entre la valeur $n^2$ effective, déterminée suivant a), au PMH de ce cylindre, et la valeur $n^2$ au PMH du cylindre suivant dans l'ordre d'allumage,
  c) cette différence est corrigée par la part respective de la hausse ou de la baisse $n^2$ moyenne pendant un cycle de fonctionnement du moteur à combustion interne, cette part résultant de la différence de la valeur $n^2$ au PMH d'un cylindre, dans le cadre du cycle de fonctionnement, et de la valeur $n^2$ de ce même cylindre à son PMH suivant,

EP 0 489 059 B1

d) les valeurs différentielles corrigées sont comparées à des seuils prédéfinis pour l'identification d'une conversion d'énergie défectueuse,

e) les fréquences relatives de conversions d'énergie défectueuses sont déterminées dans tous les cylindres, une indication de défaut étant déclenchée en cas de dépassement par le haut d'un seuil de fréquence critique.

3. Procédé suivant l'une des revendications 1 et 2, caractérisé en ce que les seuils prédéfinis sont fixés en fonction de la charge et de la vitesse de rotation du moteur à combustion interne.

4. Procédé suivant l'une quelconque des revendications 1 à 3, caractérisé en ce que la détermination de la vitesse de rotation instantanée est essentiellement assurée par rapport à un angle de rotation du vilebrequin, correspondant à l'intervalle d'allumage.

5. Procédé suivant l'une quelconque des revendications 1 à 4, caractérisé en ce que

a) la variation de la vitesse de rotation et/ou de la charge est calculée dans le cadre d'un temps prédéfini,

b) la variation calculée est comparée aux seuils prédéfinissables,

c) en cas de dépassement d'un seuil, le seuil prédéfini est élevé sur une durée prédéfinissable.

6. Procédé suivant l'une quelconque des revendications 1 à 5, caractérisé en ce que

a) la vitesse de rotation instantanée et/ou la charge instantanée sont comparées à des seuils inférieurs et supérieurs prédéfinissables,

b) en cas de dépassement par le bas et/ou par le haut d'un seuil inférieur et/ou supérieur prédéfinissable, le seuil prédéfini est élevé sur une durée prédéfinissable.

7. Procédé suivant l'une des revendications 5 et 6, caractérisé en ce que les seuils prédéfinissables et/ou la durée prédéfinissable sont fixés en fonction du régime du moteur à combustion interne.

8. Procédé suivant l'une quelconque des revendications 1, 2, 3, 5 et 6, caractérisé en ce que

a) la différence est formée entre des seuils successifs,

b) en cas de baisse d'un seuil, la valeur différentielle est comparée aux seuils différentiels prédéfinissables,

c) en cas de dépassement par le haut d'un seuil différentiel, la vitesse de variation des seuils est limitée, de sorte que la baisse d'un seuil à l'autre correspond au maximum au seuil différentiel prédéfinissable.

9. Procédé suivant la revendication 8, caractérisé en ce que les seuils différentiels pour des seuils successifs sont fixés en fonction du régime du moteur à combustion interne.

10. Dispositif pour la réalisation du procédé suivant la revendication 1, avec

a) un premier dispositif pour l'identification de la position du vilebrequin,

b) un deuxième dispositif pour l'enregistrement de la vitesse de rotation instantanée du moteur à combustion interne par rapport à un angle de rotation donné du vilebrequin, pendant le cycle de travail de chaque cylindre,

caractérisé par

c) un troisième dispositif pour le calcul du carré $n^2$ de la vitesse de rotation instantanée,

d) un quatrième dispositif pour la détermination des valeurs $n_i^2$ sur un cycle de fonctionnement du moteur à combustion interne pour chaque cylindre i, i = 1 ... z, z = nombre de cylindres, et pour le premier cylindre, référencé par i = z + 1, du cycle de fonctionnement suivant,

e) un cinquième dispositif pour former la différence

$$\Delta_{AS}n \ = \ n_{j'}{}^2 - n_j{}^2$$

pour un cylindre donné j, $n_{j'}{}^2$ étant la valeur quadratique de la vitesse de rotation du cylindre j dans le cycle de fonctionnement suivant,

pour former la valeur quadratique de la vitesse de rotation $n_i{}^2{}_{corr}$, corrigée dynamiquement, d'après l'expression

14

$$n_i^2{}_{corr} = n_i - \frac{i-1}{z} \; \Delta_{AS} n^2$$

pour i = 1 ... z + 1

et pour former la valeur différentielle $f_i$ d'après

$$f_i = n_i^2{}_{corr} - n_{i+1}^2{}_{corr}, \; i = 1 \ldots z,$$

f) un sixième dispositif pour comparer les valeurs différentielles $f_i$ aux seuils prédéfinis, en vue d'identifier une conversion d'énergie défectueuse,

g) un septième dispositif pour la détermination des fréquences relatives de conversions d'énergie défectueuses dans tous les cylindres, une indication de défaut étant déclenchée en cas de dépassement par le haut d'un seuil de fréquence critique.

**11.** Dispositif suivant la revendication 10, caractérisé par
- un premier dispositif pilote, avec
   a) un huitième dispositif pour le calcul de la variation de la vitesse de rotation et/ou de la charge dans le cadre d'un intervalle de temps prédéfinissable,
   b) un neuvième dispositif pour comparer la variation calculée aux seuils prédéfinissables,
   c) un dixième dispositif pour relever le seuil prédéfini en cas de dépassement par le haut d'un seuil.

**12.** Dispositif suivant l'une des revendications 10 et 11, caractérisé par
- un deuxième dispositif pilote, avec
   a) un onzième dispositif pour comparer la vitesse de rotation instantanée et/ou la charge instantanée aux seuils inférieurs et/ou supérieurs prédéfinissables,
   b) un douzième dispositif pour relever le seuil prédéfini sur une durée prédéfinissable, en cas de dépassement par le bas et/ou par le haut d'un seuil inférieur et/ou supérieur.

**13.** Dispositif suivant l'une quelconque des revendications 10 à 12, caractérisé par
- un troisième dispositif pilote, avec
   a) un treizième dispositif pour former la différence entre des seuils successifs,
   b) un quatorzième dispositif pour comparer la valeur différentielle, en cas de baisse d'un seuil, aux seuils différentiels prédéfinissables,
   c) un quinzième dispositif pour limiter la vitesse de variation des seuils, en cas de dépassement par le haut d'un seuil différentiel, de sorte que la baisse d'un seuil à l'autre corresponde au maximum au seuil différentiel prédéfinissable.

**14.** Dispositif suivant l'une quelconque ou plusieurs des revendications 10 à 13, caractérisé en ce que tous les dispositifs sont intégrés dans une unité de calcul commune.

# FIG. 1

# FIG. 2

# FIG.3

Zahnsignal    Phasensignal

```
┌──────────────────────┐
│ Zeitmessung der      │
│ Kurbelwinkelbereiche │
└──────────────────────┘
```

```
┌──────────────────────────┐
│ Berechnung der Momentan- │
│ drehzahl n während des   │
│ Arbeitstaktes jedes      │
│         Zylinders        │
└──────────────────────────┘
```

```
┌────────────────────────────┐
│ Berechnung des Quadrates n²│
│ der Momentandrehzahl       │
└────────────────────────────┘
```

```
┌──────────────────────────────┐
│ Berechnung des mittleren     │
│ n²-Anstieges oder -Abfalls   │
│ während jedes Arbeitsspiels  │
│ und Subtraktion desselben    │
│ von dem tatsächlichen n²-    │
│           Verlauf            │
└──────────────────────────────┘
```

```
┌──────────────────────────────┐
│ Bildung der Differenz zwischen│
│ den korrigierten n²-Werten zum│
│ Zünd-OT jedes Zylinders und des│
│ in der Zündfolge nächsten     │
│          Zylinders            │
└──────────────────────────────┘
```

Drehzahl ────▶
Last ────────▶
```
┌──────────────────────────────┐
│ Abfrage der Differenzwerte   │
│ für jeden Zylinder auf Über- │
│ schreiten last- und drehzahl-│
│ abhängiger Schwellwerte      │
└──────────────────────────────┘
```

```
┌──────────────────────────────┐
│ Feststellung der statistischen│
│ Häufigkeit des Überschreitens │
└──────────────────────────────┘
```

```
┌──────────────────────────────┐
│ Fehleranzeige bei Überschreiten│
│ einer kritischen Häufigkeit   │
└──────────────────────────────┘
```

Zünd-OT Zyl.   1    2    3    4    5    6    7    8    1'

0                    °KW                        720

# FIG.4

$t_1$  $t_2$  $t_3$  $t_4$  $t_5$  $t_6$  $t_7$  $t_8$  $t_{1'}$

Kurbelwinkelbereiche und jeweilige Zeitdauer

$n_1^2$  $n_2^2$  $n_3^2$  $n_4^2$  $n_5^2$  $n_6^2$  $n_7^2$  $n_8^2$  $n_{1'}^2$

Drehzahlquadrat-Werte

# FIG.5

$1/s^2$  $n^2$

900

800

700

A

B

0

Zünd-OT Zyl.1   2    3    4    5    6    7    8    1'

# FIG.6

$n^2$ dyn.komp.

750

$1/s^2$

$f_2$

700

C

0

Zünd-OT Zyl.1   2    3    4    5    6    7    8    1'

# FIG. 7

Zahnsignal          Phasensignal

```
Zeitmessung der Kurbelwinkelbereiche
```

```
Berechnung der Momentandrehzahl n während
des Arbeitstaktes jedes Zylinders
```

```
Berechnung des Quadrates n² der Momentan-
drehzahl
```

```
Berechnung des mittleren n²-Anstieges oder
-Abfalls während jedes Arbeitsspiels und
Subtraktion desselben von dem tatsächlichen
n²-Verlauf
```

```
Bildung der Differenz zwischen den korrigierten
n²-Werten zum Zünd-OT jedes Zylinders und des
in der Zündfolge nächsten Zylinders
```

```
Falls Last- oder Drehzahländerungen Grenzwerte
        überschreiten
        oder
        Last oder Drehzahl Grenzwerte über- oder
Last ──▶ unterschreiten:
            Hochsetzen der Erkennungsschwellen

Sonst:  Ermittlung last- und drehzahlabhängiger
            Erkennungsschwellen
```

Vorsteuerung der Erkennungsschwellen

```
Begrenzung der Änderungsgeschwindigkeit der
Schwellenwerte von hohen zu niedrigen Werten
```

```
Abfrage der Differenzwerte für jeden Zylinder
auf Überschreiten der Schwellenwerte
```

```
Feststellen der statistischen relativen
Häufigkeit des Überschreitens
```

```
Fehleranzeige bei Überschreiten einer
kritischen relativen Häufigkeit
```

19

# FIG.8

Motorlast

a)

Gasstoß

Kurbelwellendrehzahl

b)

Schwellenwerte
mit Vorsteuerung

c)

$\Delta n^2$

Schwellenwerte
ohne Vorsteuerung

d)

$\Delta n^2$

Schub

Fehl-Erkennungen

Erkennungsschwelle

t (Zeit)

# FIG.9

Drehzahl

1/min

2000

988

1 → Einkuppeln        Motorarbeitsspiele        15

# FIG.10

Last

Vollast

untere Drehzahlgrenze
obere Drehzahlgrenze
untere Lastgrenze

Leerlauf        Drehzahl

# FIG.11

| | | | | |
|---|---|---|---|---|
| 0.8 | 1.0 | 1.2 | 1.4 | 1.6 |
| 0.6 | 0.8 | 1.0 | 1.2 | 1.4 |
| 0.4 | 0.6 | 0.8 | 1.0 | 1.2 |
| 0.2 | 0.4 | 0.6 | 0.8 | 1.0 |

Last

Drehzahl